# EUROPEAN PATENT SPECIFICATION

(11) **EP 2 605 894 B1**
(45) Date of publication and mention of the grant of the patent: **04.10.2017**
(21) Application number: 11752457.9
(22) Date of filing: 12.08.2011
(51) Int. Cl.: B29C 33/30, B29C 53/04, B32B 38/18, E04D 13/03

(54) **DEVICE AND METHOD FOR MANUFACTURING AN ARCHED ELEMENT**
VORRICHTUNG UND VERFAHREN ZUR HERSTELLUNG EINES BOGENFÖRMIGEN ELEMENTS
DISPOSITIF ET PROCÉDÉ DE FABRICATION D'UN ÉLÉMENT ARQUÉ

(30) Priority: 16.08.2010 BE 201000490
(43) Date of publication of application: 26.06.2013
(73) Proprietor: Glorieux, Jean Marc Gilles, 8554 Zwevegem (Sint-Denijs) (BE)
(72) Inventor: Glorieux, Jean Marc Gilles, 8554 Zwevegem (Sint-Denijs) (BE)
(74) Representative: D'Halleweyn, Nele Veerle Trees Gertrudis
(86) International application number: PCT/BE2011/000053
(87) International publication number: WO 2012/021946

(56) References cited:
- EP-A1- 1 852 561
- EP-A1- 2 292 408
- WO-A1-2006/005942
- DE-A1- 19 810 478
- FR-A3- 2 698 901
- GB-A- 1 509 989
- GB-A- 2 281 532
- GB-A- 2 284 570
- GB-A- 2 467 784
- US-A- 4 522 641
- US-A- 5 156 859
- US-A1- 2003 056 887
- US-B1- 6 623 323

## Description

The present invention relates to a device and method for manufacturing an arched element using a mould, typically a roof element intended for placing between two upstands at a distance (clear width S) from each other. The manufacture of roof elements with a determined radius of curvature for skylight barrel vaults using a fixed mould is generally known. Because a fixed mould is used, the radius of curvature is fixed and the clear width range for which the method is suitable is limited. The connection of the roof element to the upstand can moreover not be made in a standard manner for different clear widths because the angle of inclination close to the upstand is directly dependent on the desired clear width.

Document GB 2281532 - A discloses an apparatus for forming articles with a curved profile such as mudguards from thermoplastic material comprising a frame supporting at least one intermediate forming roller mounted adjustably at a position between a first forming roller and a final forming roller. The curved profile of the article to be formed can be adjusted by altering the relative positions of the said rollers.

Document US 6623323 - B discloses a method of fabricating high-strength sandwich skin products, e.g. surfboards, and uses the thickness of a high-density foam skin core to mask minor imperfections on the surface of the mould, thereby allowing the mould to be divided into separate integral parts that have the capacity to be moved, then fixed and set, so as to describe different curves or modify dimensions of the board.

Document GB 1509989 - A discloses the continuous application of curvature to softened glass sheets using profile hoops which can be pivoted to vary their degree of deflection with the plane of the sheet.

The present invention wishes to obviate the above stated drawbacks of the prior art and has for its object to provide a method and device of the type described in the preamble with which a series of arched elements with a different radius of curvature can be manufactured in simple manner.

A device for manufacturing an arched element is defined in claim 1.

Preferred embodiments of the device are defined in the dependent claims 2 to 12.

The device for manufacturing an arched sheet with a determined radius of curvature according to the invention is distinguished for this purpose in that the device comprises an adjustable mould with an arched surface. The arched surface has a curved longitudinal direction L with a radius of curvature R over which the material layer to be formed is guided and formed. The adjustable mould has a supply side extending in the transverse direction D of the arched surface and a discharge side parallel thereto. The adjustable mould is further adapted to change the radius of curvature R of the arched surface by altering the position of the discharge side relative to the supply side.

According to an advantageous embodiment the device comprises adjusting means for adjusting the position of the discharge side. These adjusting means can for instance be adapted to move the discharge side vertically and horizontally. According to another option, the adjusting means are adapted to move the discharge side along a determined path. Note that it is also possible to move the supply side (optionally in combination with the discharge side).

The mould comprises a structure which comprises a first set of first profiles lying adjacently of each other in the longitudinal direction, wherein adjacent first profiles are connected to each other for pivoting in each case around a first transverse shaft. The structure further comprises a set of second profiles lying adjacently of each other in the longitudinal direction, which are connected in similar manner to each other for pivoting in each case around a transverse shaft. These second profiles are parallel to the first profiles. The structure also comprises a set of stiff first transverse connections between the first and second profiles. Further provided is at least one mould forming part which extends over and is preferably supported by the first transverse connections so as to form the arched surface over which the material layer is guided and formed. Such a mould forming part can for instance be a metal caterpillar track. The mould forming part can be provided on its outer side, over which the material layer is guided, with a determined profiling, for instance a profiling with a wave-like cross-section, for the purpose of obtaining an arched corrugated sheet. A number of mutually connecting mould forming parts will typically be mounted against the first stiff transverse connections. These mould forming parts are preferably provided with heating means, typically electric heating elements, for heating and curing the material layer passing over the forming parts. These heating means are typically adapted to heat the outer side of the mould forming parts in a range between 150 and 200 degrees Celsius. The structure further comprises positioning means for setting the position of the first and second profiles as a function of the position of the discharge side relative to the supply side. These positioning means will ensure that the first and second profiles move away from/ toward each other in the same manner around the respective first pivot shafts in order to obtain a determined larger or smaller radius of curvature.

According to a particularly advantageous embodiment, each first and second profile has a first, second and third corner, which are preferably located in a plane perpendicularly of the arched surface. The first and second corners are adjacent to the arched surface and the third corner typically lies equidistantly from the first and second corner. For each pair of adjacent profiles the first corner of a profile of this pair is pivotally connected to the second corner of the adjacent profile by means of the first transverse shaft. The first transverse connection between first and second profiles then preferably extends between opposite first corner points of each pair of first and second profiles. For good overall strength it is a further advantage for each first profile to be fixedly connected to an opposite second profile close to the third corner point by means of a transverse connecting rod. In this embodiment the positioning means comprise for instance a distance adjusting means between the third corner of a first or second profile and the third corner of the adjacent first or second profile. Use can in this way be made of triangular profiles which are connected to each other in a convenient manner to form the adjustable mould. According to a possible embodiment the distance adjusting means comprises a first arm and a second arm connected thereto for pivoting around a second transverse shaft. The movement of this second transverse shaft away from/toward the arched surface is thus accompanied by movement of adjacent profiles away from/toward each other. According to an advantageous embodiment hereof, the positioning means further comprise a stiff second transverse connection which mutually connects opposite second transverse shafts. At least one first telescopic element can then be arranged between the first and second stiff transverse connections. Each telescopic element is fixedly connected at a first outer end to the first stiff transverse connection and at a second outer end to the corresponding second stiff transverse connection.

This first telescopic element is typically a mechanically drivable element such as a jack. The positioning means can further comprise between adjacent first stiff transverse connections at least one second drive shaft which extends substantially in longitudinal direction and is coupled on either side to a mechanically drivable telescopic element. This drive shaft is typically a cardan shaft which, by means of gear transmission, converts a movement of the cardan shaft to the lengthening/shortening of the mechanically drivable telescopic element.

The invention further relates to a method according to claim 13, method which is distinguished in that an adjustable mould with an arched surface is provided, which arched surface has an adjustable radius of curvature; the mould is set for the determined radius of curvature by displacing components of the mould; and the arched element is formed by guiding the supplied material layer over the set mould.

A preferred embodiment of the method is defined in claim 14.

According to the preferred embodiment the arched surface has a transverse direction D, a curved longitudinal direction L with a radius of curvature R and a supply side extending in the transverse direction D and a discharge side parallel thereto, and the mould is adjusted by displacing the discharge side relative to the supply side. An embodiment of the above described device is preferably used for this purpose.
The shape of the roof element can be optimized by adjusting the mould for a radius of curvature which is a function of the desired clear width. The clear width range can in this way be increased without an additional mould being necessary.

According to a preferred embodiment the determining of the radius of curvature consists of calculating for the desired clear width the radius of curvature for which the angle between a horizontal plane and the roof element close to the upstand (angle of inclination) lies within a determined range and in particular acquires a determined constant value. Standard systems can in this way be used to fix the roof element to the upstand, irrespective of the clear width.

The material layer preferably comprises a composite resin such as a polyester resin. For the roof elements onto which direct light is incident the material from which the roof element is manufactured is advantageously UV-stabilized such that the initial light and colour transmission is retained. Glass fibres can further be added to the material from which the roof element is manufactured in order to strengthen the roof element. The material layer is preferably formed by arranging a composite resin (and optionally fibres) between two films and heating this composite film material. A roof element is described comprising an arched sheet with two transverse sides and a radius of curvature, wherein the arched sheet can be fixed to an upstand close to each transverse side and wherein the shape of the sheet is determined by that of a mould. The roof element is distinguished in that the radius of curvature of the arched sheet is adapted as a function of the desired distance between the transverse sides by adjusting the radius of curvature of the mould. In this way a wide range of roof elements with different radii of curvature can be assembled for different clear widths, this such that these roof elements have an optimal shape and/or weight for the desired clear width. The radius of curvature of the arched sheet can for instance thus be adapted in order to obtain a determined angle of inclination of the arched sheet relative to the horizontal plane close to the upstand.

Finally, a roof assembly is described comprising at least one such roof element, which can be connected in each case to an upstand close to each transverse side. Subject to the desired application, multi-wall constructions comprising multiple roof elements one above another can be erected using such an assembly.

The roof assembly preferably comprises a mounting profile which can be arranged between a transverse side of each roof element and the upstand. For an upstand with a substantially horizontal upper surface it is recommended that each roof element has transverse sides with a substantially horizontal underside, wherein this underside can be mounted in the mounting profile. In this way roof elements intended for different clear widths can all be cut substantially horizontally in the same manner and mounted using the same mounting profiles.

According to a possible embodiment the mounting profile is constructed from a plate provided on the upper side with a number of flanges between which a transverse side of a roof element can in each case be placed, wherein the underside thereof is placed against the plate. The mounting profile can further be provided on its underside with a flange which has the function of a drip edge.

The invention will be further elucidated on the basis of a number of non-limitative exemplary embodiments of the device, and of the method which are shown in the accompanying drawing, in which:
- figure 1 is a schematic cross-section of a prior art roof element arranged on two upstands;
- figure 2 is a schematic cross-section of a roof element arranged on two upstands;
- figure 3 illustrates schematically an embodiment of the method and device according to the invention;
- figure 4 is a schematic perspective view of a device according to the invention;
- figure 5 is a schematic perspective detail view of the upper side of the device of figure 4 as seen from the rear;
- figure 6 is a schematic perspective detail view of the underside of the device of figure 4 as seen from the bottom;
- figure 7 is a schematic perspective detail view of the mould adjusting mechanism of the device of figure 4, wherein the belt-like mould forming part 102 is omitted for the sake of clarity;
- figure 8 is a schematic perspective detail view of the mould adjusting mechanism of the device of figure 4 as seen from the other side, wherein for the sake of clarity two second profiles 112' are drawn transparently;
- figure 8A is a detail view of the jack and cardan shafts shown in figure 8, wherein a number of elements are omitted for the sake of clarity;
- figure 9 is a perspective view of a roof assembly arranged on two upstands;
- figure 10 shows a cross-section of the roof assembly of figure 9;
- figure 11 shows a cross-section of a second embodiment of a roof assembly and
- figure 12 shows a cross-section of a third embodiment of a roof assembly.

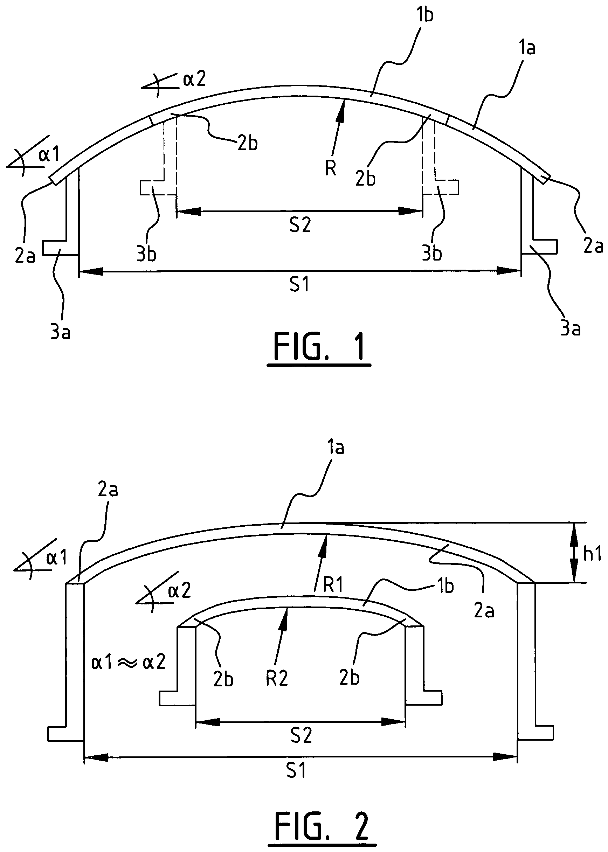

Figure 1 shows a schematic cross-section of two roof elements, each comprising an arched sheet 1a (1b), each with two transverse sides 2a (2b) and a radius of curvature R. Each arched sheet 1a (1b) is mounted close to each transverse side 2a (2b) on an upstand 3a (3b). According to the prior art such an arched sheet 1a, 1b is typically manufactured from an optionally glass fibre-reinforced composite resin such as a polyester resin, and is formed using a fixed mould so that a sheet with a fixed radius of curvature R is formed. It is consequently the case that the greater the distance between the two upstands 3a, i.e. the greater the clear width S1, the greater the angle of inclination a close to the upstand, wherein the angle of inclination is the angle the sheet forms to a horizontal plane. As illustrated in figure 1, a roof element 1a intended for placing between two upstands 3a with a greater clear width S1 will be higher and require a relatively larger quantity of material compared to a roof element 1b intended for a smaller clear width S2.

Figure 2 shows schematically a roof element 1a, 1b for which the radius of curvature R1, R2 of the arched sheet is adapted as a function of the desired distance between the transverse sides 2a, 2b by modifying the radius of curvature of the mould. The radius of curvature can be chosen here such that roughly equal angles of inclination a1, a2 are for instance obtained close to the upstand. The radius of curvature R1, R2 can however also be optimized to obtain a maximum strength of the sheet or to obtain a determined height h1 of the roof element.

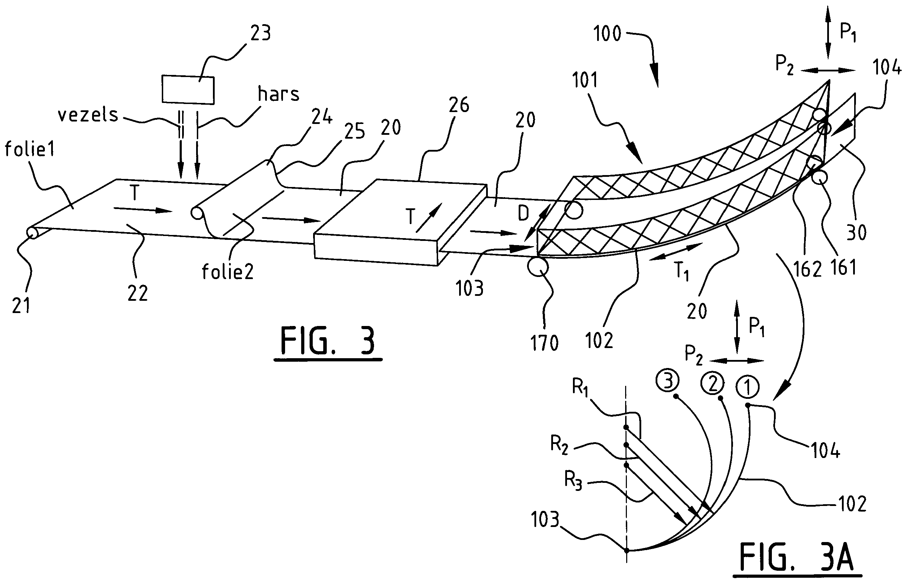

The manufacture of such a roof element 1a, 1b, which is suitable for placing between two upstands at a distance (clear width S) from each other, proceeds as follows:
- a radius of curvature R1, R2 is determined on the basis of the desired clear width S1, S2;
- the mould is set for the determined radius of curvature R1, R2 by displacing components of the mould;
- and the roof element is formed with the thus set mould.
An embodiment of the method and device according to the invention is illustrated schematically in figure 3. A first film 22, typically a thermosetting polyester film such as a PET film, is unwound from a roll 21 and transported by means of a conveyor belt (not shown) in the direction of arrow T. In a first station 23 a composite resin such as a polyester resin, an epoxy resin or a polyurethane resin, and typically also reinforcing fibres such as glass fibres, are arranged on film 22. Other additives such as heat-resistant additives can also be added. In a subsequent operation a second film 25, typically a thermosetting polyester film such as a PET film, is unwound from a roll 24 and laid over the first film covered with resin and fibres. This composite film material 20 is heated in a heating station 26 and then transported to a device 100 for shaping the continuously supplied material layer 20.

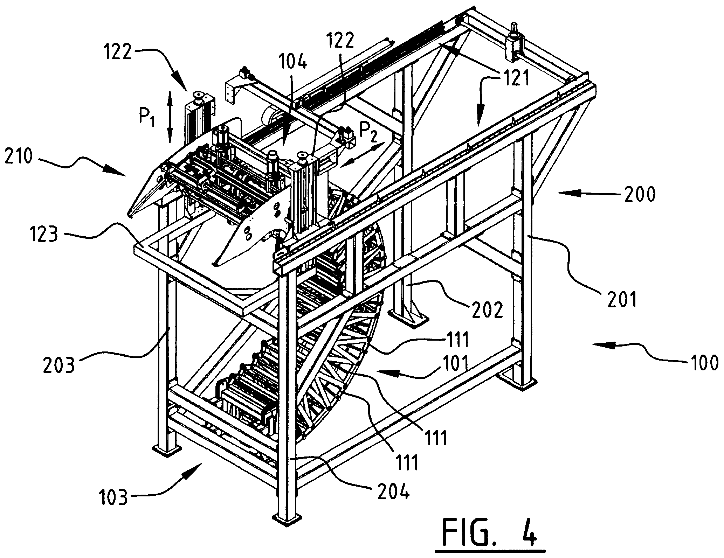

Device 100 comprises an adjustable mould 101 for manufacturing an arched sheet 30 with a determined radius of curvature making use of the continuously supplied material layer 20. The adjustable mould 101 has an arched surface 102 with a straight transverse direction D and a curved longitudinal direction L. The arched surface has a radius of curvature R, see also figure 3A, which schematically illustrates three possible radii of curvature R1, R2, R3. The adjustable mould 101 has a supply side 103 which extends in the transverse direction and to which the continuously supplied material layer 20 is carried, and a discharge side 104 which is parallel thereto and from which the formed arched sheet leaves mould 101. Pressing wheels 170 can be provided at the supply side for pressing the supplied material layer 20 to be formed against the arched surface. Note that these pressing wheels are not present in the detailed embodiment of figures 4-8, but can optionally be added. Pulling wheels 161, 162 are further provided for pulling material layer 20 upward over the arched surface. The mould is adapted to change the radius of curvature R of the arched surface by altering the position of the discharge side relative to the supply side, see arrows P1 and P2. This is illustrated in more detail in figure 3A, which shows three successive positions 1-3 of discharge side 104. In a first position 1 the arched surface 102 has a radius of curvature R1, in a second position 2 the arched surface 102 has a smaller radius of curvature R2 and in a third position the arched surface 102 has an even smaller radius of curvature R3.

Arched surface 102 is typically heated to a temperature which lies between 150 and 180 degrees Celsius, and can for instance increase from 150 degrees at the supply side to 180 degrees at the discharge side.

For the outer roof elements the composite resin is generally UV-stabilized, thereby guaranteeing that the initial colour and light transmission is retained. This UV stabilization can for instance take place by using a co-extrusion PET film with a UV-stable top layer. The surface hereby moreover remains very smooth, whereby a self-cleaning effect occurs in the case of heavy rainfall.

Figures 4-8 illustrate in detail a possible embodiment of device 100. As best illustrated in figure 4, mould 101 is mounted in a frame 200 with four uprights 201-204. In figure 4 the supply side 103 is located at bottom left in the drawing, and discharge side 104 is located at the top. Note that an similar construction can be envisaged wherein the supply side is located at the top and the discharge side at the bottom. In the shown embodiment the discharge side can be moved horizontally and vertically using vertical guide means 122 and horizontal guide means 121. Note that it would likewise be possible to make the supply side movable, although this is generally less practical because the supply of material layer 20 would then have to take place at different heights. Provided in the shown embodiment is an upper carriage 210 to which discharge side 104 is connected. This upper carriage is vertically movable as according to arrow P1 along vertical guide means 122 provided on either side of upper carriage 210. The vertical guide means are provided on a frame 123. This frame 123 is provided with slide blocks (not visible in figure 4) which can be guided in horizontal guide means 121. Note that according to another embodiment the upper carriage could also have been guidable in horizontal guide means mounted on a frame, wherein this frame is then in turn vertically displaceable. According to yet another option, the discharge side can also be placed and supported in the desired position with separate means, such as for instance a robot arm.

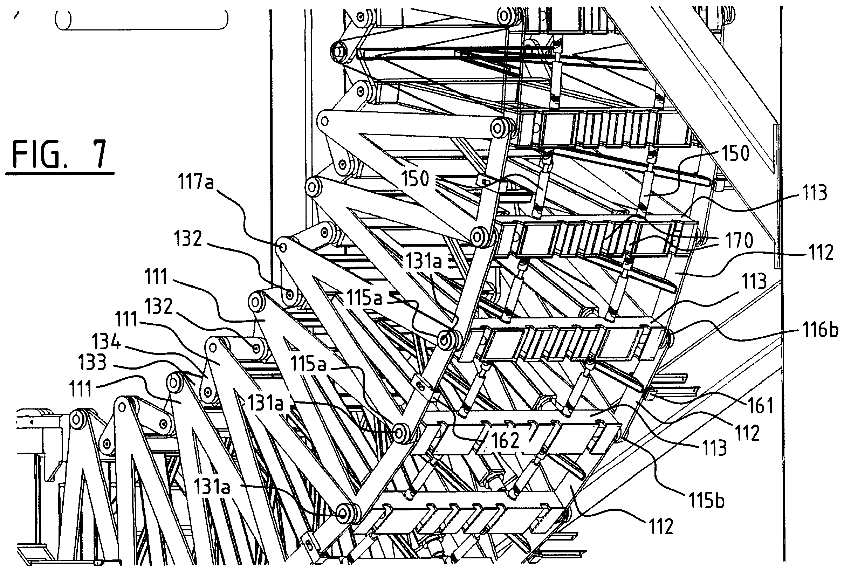

Mould 101 has a structure which is assembled from a large number of first profiles 111 lying adjacently of each other in the longitudinal direction L, a large number of second profiles 112 lying adjacently of each other in the longitudinal direction L and parallel to the first profiles, and a number of stiff first transverse connections 113 between the first and second profiles 111, 112. Each first profile 111 is pivotally connected to an adjacent first profile by a first transverse shaft 131a. In similar manner each second profile is pivotally connected to an adjacent second profile by a corresponding first transverse shaft 131b. One or more mould forming parts, typically in the form of a number of mutually connecting metal flexible belts, extend over and are supported by the first transverse connection 113 for the purpose of forming the arched surface. Only one mould forming part 102 can be distinguished in the figures, but it will typically consist of a number of mutually connecting belt parts, each equipped with electric heating elements for heating the outer side of these parts. As shown most clearly in figure 7, the top side of the first transverse connection 113 can be provided with a number of grooves for receiving therein complementary ribs on the rear side of the mould forming parts 102 not shown in figure 7. The first profiles 111 located on the outer side and the opposite second profiles 112 are further provided with clamping means 161, 162 for locally clamping the sides of mould forming part 102.

Positioning means are further provided for setting the position of the first and second profiles 111, 112 as a function of the position of the discharge side relative to the supply side, i.e. as a function of the desired radius of curvature. These positioning means will particularly ensure that, in a determined position of the discharge side, a determined radius of curvature is obtained over the whole outer surface of mould forming part 102 and the mould forming part does not therefore "sag". The arched surface 102 must after all describe a substantially cylindrical surface in all positions of discharge side 104, see also figure 3A.

Each first and second profile 111, 112 is substantially triangular and has a first, second and third corner 115a, 115b; 116a, 116b; 117a, 117b. Although the first and second profile are shown as integrally formed profiles, the skilled person will appreciate that they may also consist of multiple parts rigidly connected to each other. The first and second profiles extend in a plane perpendicularly of the arched surface, wherein the first and second corner are adjacent to the arched surface. For each pair of adjacent first profiles 111 the first corner 115a of a profile thereof is pivotally connected by means of a first transverse shaft 131a to the second corner 116a of the adjacent profile. In similar manner the first corner 115b of a second profile 112 is pivotally connected by means of a first transverse shaft 131b to the second corner 116b of the adjacent second profile. The first transverse connections 113 lie substantially between opposite first (second) corner points 115a;115b (116a; 116b) of first and second profiles. Each first profile 111 is further connected fixedly to an opposite second profile 112 close to the third corner point 117a by means of a transverse connecting rod 115.

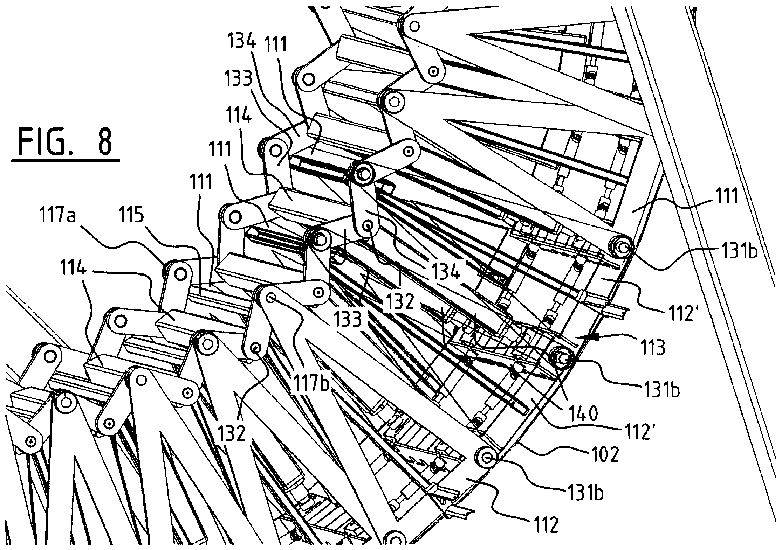

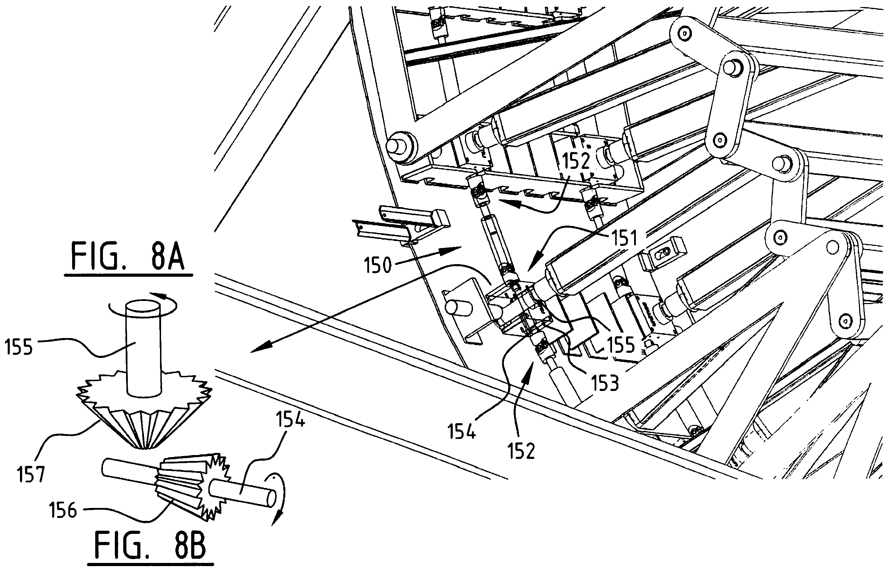

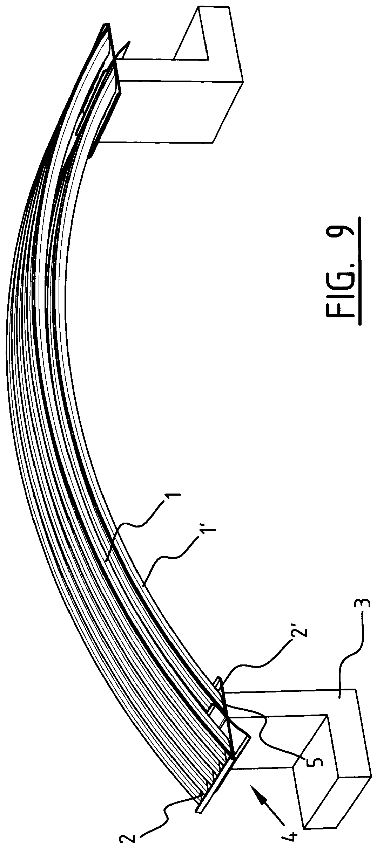

In order to position the first and second profiles a distance adjusting means is provided in each case between the third corners of adjacent first or second profiles. This distance adjusting means here comprises a first arm 133 and a second arm 134 connected thereto for pivoting around a second transverse shaft 132. Opposite second transverse shafts 132 are mutually connected by a stiff second transverse connection 114, see figure 8. The position of the second transverse shafts is further determined by two first jacks 140 which are each connected fixedly at a first outer end to the first stiff transverse connection 113 and at a second outer end to the corresponding second stiff transverse connection 114. These jacks 140 can be best seen in figure 8, which shows two first profiles 112' transparently. Further provided are drive shafts in the form of cardan shafts 150 which extend substantially in the longitudinal direction between adjacent first stiff transverse connections 113. Such a drive shaft is coupled on either side to a jack by means of cardan couplings 151, 152 and a gear transmission in a housing 153, see figure 8A. The gear transmission converts the rotation movement of shaft 154 to a rotation movement of shaft 155 via toothed wheels 156, 157, see the schematic outline in figure 8B. Such a construction will ensure that, when the distance between supply side and discharge side is increased, the distance between adjacent third corner points 117a (or 117b) increases in the same way for all profiles such that the radius of curvature is increased in uniform manner. Figure 9 illustrates a roof assembly with two possible roof elements 1, 1' The roof element is connected close to its transverse sides to upstand 3. As shown in figure 9, this typically takes place using a mounting profile 4 arranged between a transverse side 2 of each roof element 1, 1' and an upstand 3. Transverse sides 2, 2' have a substantially horizontal underside, wherein this underside is mounted in mounting profile 4. In this way the roof element can be easily mounted on an upstand 3 with a horizontal upper side 5.

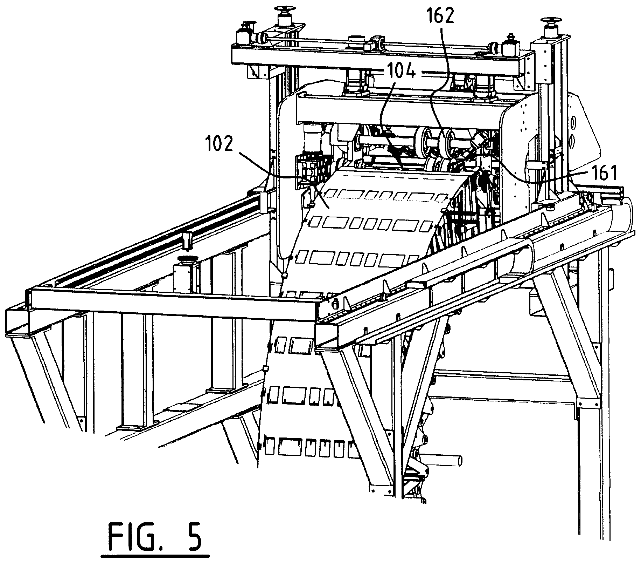

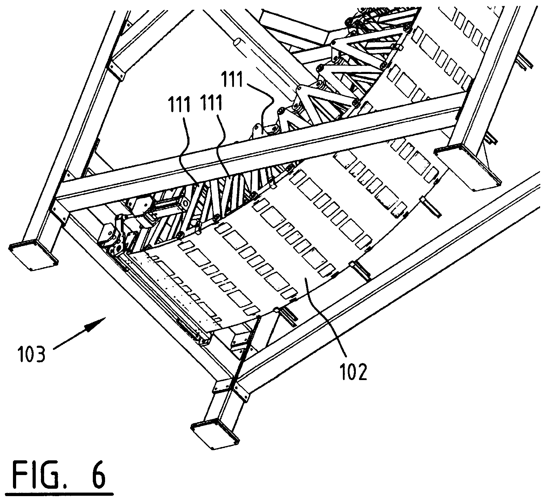

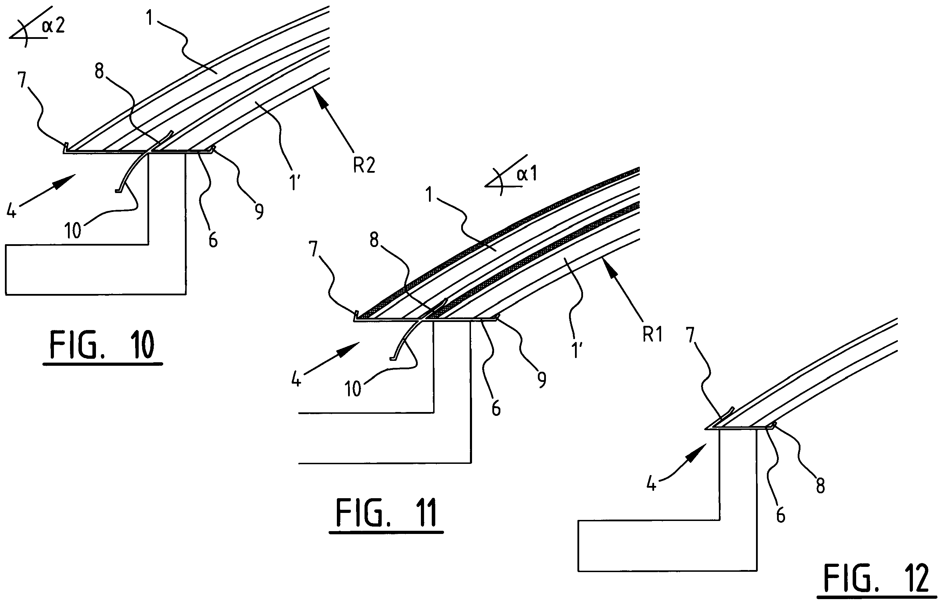

As can best be seen in figures 10, 11 and 12, mounting profile 4 is constructed in the shown embodiment variants from a plate 6 provided on its upper side with a number of flanges 7-9, between which a transverse side 2, 2' of a roof element can be placed in each case, wherein the horizontal underside of the transverse sides is placed against plate 6. Figures 4 and 5 show variants in which a double-walled roof construction with two arched shells 1, 1' are placed in such a mounting profile 4, while figure 6 shows a single-walled variant. Such a mounting profile 4 can for instance be manufactured from a pultruded polyester or from aluminium. The roof elements can for instance be connected by adhesion to the mounting profile, which can in turn be connected by adhesion to the upstand. Other mechanical connecting techniques such as rivetting or screwing can of course also be envisaged perfectly well.

By keeping the angle of inclination a1, a2 roughly constant for the different clear widths S1, S2 the same mounting profiles 4 can be used for different clear widths, whereby the production cost is lower and assembly easier. The illustrated mounting profile moreover allows some margin in the angle of inclination a, as can be seen in figures 10 and 11.

The mounting profile 4 shown in figures 10 and 11 is further provided on its underside with a flange 10 which has the function of a drip edge along which rainwater can be drained.

The skilled person will appreciate that the invention is not limited to the above described exemplary embodiments and that many modifications are possible within the scope of the invention, which is defined solely by the following claims.

## Claims

1. Device (100) for manufacturing an arched sheet (11) with a determined radius of curvature making use of a continuously supplied material layer (10), **characterized in that** the device comprises an adjustable mould (101) with an arched surface (102) for forming the continuously supplied material layer thereon, which arched surface 102 has a transverse direction D, a curved longitudinal direction L with a radius of curvature R, and a supply side (103) extending in the transverse direction (D) and a discharge side (104) parallel thereto; which adjustable mould is adapted to change the radius of curvature R of the arched surface by altering the position of the discharge side relative to the supply side (P1, P2).

2. Device as claimed in claim 1, further comprising adjusting means for adjusting the position of the discharge side.

3. Device as claimed in claim 2, wherein the adjusting means are adapted to move the discharge side vertically and horizontally.

4. Device as claimed in claim 1 or 2, wherein the adjusting means comprise vertical and horizontal guide means (121, 122), wherein the discharge side can be guided and locked in the vertical guide means and wherein the vertical guide means are mounted movably in the horizontal guide means, this such that the discharge side is horizontally and vertically displaceable.

5. Device as claimed in any of the foregoing claims, wherein the mould comprises a structure which is assembled from:
- at least three first profiles (111) which lie adjacently of each other in the longitudinal direction and which are connected to each other for pivoting in each case around a first transverse shaft (131a);
- at least three second profiles (112) which lie adjacently of each other in the longitudinal direction and which are connected to each other for pivoting in each case around a first transverse shaft (131b); which second profiles are parallel to the first profiles;
- a set of stiff first transverse connections (113) between the first and second profiles;
- a mould forming part (102) which extends over the first transverse connections so as to form the arched surface; and
- positioning means for setting the position of the first and second profiles as a function of the position of the discharge side relative to the supply side.

6. Device as claimed in claim 5, wherein each first and second profile has a first, second and third corner (115a,115b); (116a,116b); (117a,117b), wherein the first and second corners are adjacent to the arched surface; wherein for each pair of adjacent profiles (111, 112) the first corner of a profile thereof is pivotally connected to the second corner of the adjacent profile by means of the first transverse shaft (131); and wherein the positioning means comprise a distance adjusting means between the third corner of a profile thereof and the third corner of the adjacent profile.

7. Device as claimed in claim 6, wherein the first transverse connection (113) extends substantially between opposite first corner points (115a; 115b) of first and second profiles.

8. Device as claimed in claim 6 or 7, wherein each first profile is fixedly connected to an opposite second profile close to the third corner point by means of a transverse connecting rod (115).

9. Device as claimed in claim 6, 7 or 8, wherein the distance adjusting means comprises:
a first arm (133) and a second arm (134) connected thereto for pivoting around a second transverse shaft (132).

10. Device as claimed in any of the claims 5-9, wherein the positioning means further comprise:
- a stiff second transverse connection (114) which mutually connects opposite second transverse shafts; and
- at least one telescopic element (140), preferably a mechanically drivable telescopic element, between each first and second stiff transverse connection.

11. Device as claimed in any of the claims 5-10, wherein the positioning means further comprise at least one drive shaft (150) between adjacent first stiff transverse connections (113), which drive shafts extend substantially in longitudinal direction and are adapted to control the telescopic elements (140).

12. Device as claimed in any of the claims 5-11, wherein each first stiff transverse connection is provided with a support surface adapted to support the mould forming part.

13. Method for manufacturing an arched element with a determined radius of curvature making use of a continuously supplied material layer, **characterized in that**
- a mould with an arched surface is provided, which arched surface has an adjustable radius of curvature, wherein the arched surface has a transverse direction D, a curved longitudinal direction L with a radius of curvature R, and a supply side (103) extending in the transverse direction D and a discharge side (104) parallel thereto;
- the mould is set for the determined radius of curvature by displacing the discharge side relative to the supply side;
- and the arched element is formed by guiding the supplied material layer over the set mould.

14. Method as claimed in claim 13, wherein the arched surface is heated to a temperature between 140 and 200 degrees Celsius; and/or a composite resin, such as a polyester resin, is added to the material layer; and/or the material layer is UV-stabilized; and/or glass fibres are added to the material layer; and/or the material layer is formed by arranging a composite resin and optionally fibres between two films and heating this composite film material.

## Patentansprüche

1. Vorrichtung (100) zum Herstellen einer gekrümmten Platte (11) mit einem bestimmten Krümmungsradius unter Verwenden einer kontinuierlich zugeführten Materialschicht (10), **dadurch gekennzeichnet, dass** die Vorrichtung aufweist eine einstellbare Form (101) mit einer gekrümmten Fläche (102) zum darauf Formen der kontinuierlich zugeführten Materialschicht, welche gekrümmte Fläche 102 eine Querrichtung D, eine gekrümmte Längsrichtung L mit einem Krümmungsradius R, eine Zuführseite (103), die sich in der Querrichtung (D) erstreckt, und eine dazu parallel Auslassseite (104) hat, wobei die einstellbare Form eingerichtet ist, um den Krümmungsradius R der gekrümmten Fläche zu ändern durch Verändern der Position der Auslassseite relativ zu der Zuführseite (P1, P2).

2. Vorrichtung wie in Anspruch 1 beansprucht, ferner aufweisend Einstellmittel zum Einstellen der Position der Auslassseite.

3. Vorrichtung wie in Anspruch 2 beansprucht, wobei die Einstellmittel eingerichtet sind, um die Auslassseite vertikal und horizontal zu bewegen.

4. Vorrichtung wie in Anspruch 1 oder 2 beansprucht, wobei die Einstellmittel aufweisen vertikale und horizontale Führungsmittel (121, 122), wobei die Auslassseite in den vertikalen Führungsmitteln geführt und verriegelt werden kann und wobei die vertikalen Führungsmittel in den horizontalen Führungsmitteln bewegbar montiert sind, dies derart, dass die Auslassseite horizontal und vertikal verlagerbar ist.

5. Vorrichtung wie in irgendeinem der vorhergehenden Ansprüche beansprucht, wobei die Form aufweist eine Struktur, welche zusammengebaut ist aus:
- wenigstens drei ersten Profilen (111), welche in der Längsrichtung benachbart zueinander liegen und welche miteinander verbunden sind zum Schwenken in jedem Falle um einen ersten Querschaft (131a),
- wenigstens drei zweiten Profilen (112), welche in der Längsrichtung benachbart zueinander liegen und welche miteinander verbunden sind zum Schwenken in jedem Falle um einen ersten Querschaft (131b), welche zweiten Profile parallel zu den ersten Profilen sind,
- einem Satz von starren ersten Querverbindungen (113) zwischen den ersten und den zweiten Profilen,
- einem Form bildenden Teil (102), welches sich über den ersten Querverbindungen erstreckt, um die gebogene Fläche zu bilden,
- Positioniermittel zum Setzen der Position der ersten und der zweiten Profile als eine Funktion der Position der Auslassseite relativ zur Zuführseite.

6. Vorrichtung wie in Anspruch 5 beansprucht, wobei jedes erste und zweite Profil eine erste, eine zweite und eine dritte Ecke (115a, 115b); (116a, 116b); (117a, 117b) hat, wobei die erste und die zweite Ecke benachbart zu der gekrümmten Fläche sind, wobei für jedes Paar benachbarter Profile (111, 112) die erste Ecke eines Profile davon schwenkbar mit der zweiten Ecke des benachbarten Profils verbunden ist mittels des ersten Querschafts (131), und
wobei die Positioniermittel ein Abstandseinstellmittel zwischen der dritten Ecke eines Profils davon und der dritten Ecke des benachbarten Profils aufweisen.

7. Vorrichtung wie in Anspruch 6 beansprucht, wobei die erste Querverbindung (113) sich im Wesentlichen zwischen gegenüberliegenden Eckpunkten (115a, 115b) der ersten und der zweiten Profile erstrecken.

8. Vorrichtung wie in Anspruch 6 oder 7 beansprucht, wobei jedes erste Profil mit einem gegenüberliegenden zweiten Profil fest verbunden ist nahe dem dritten Eckpunkt mittels einer Querverbindungsstange (115).

9. Vorrichtung wie in Anspruch 6, 7 oder 8 beansprucht, wobei das Abstandseinstellmittel aufweist:
einen ersten Arm (133) und einen zweiten Arm (134), der mit diesem verbunden ist, zum Schwenken um einen zweiten Querschaft (132).

10. Vorrichtung wie in irgendeinem der Ansprüche 5-9 beansprucht, wobei die Positioniermittel ferner aufweisen:
- eine starre zweite Querverbindung (114), welche gegenüberliegende Querschäfte miteinander verbindet, und
- wenigstens ein teleskopisches Element (140), bevorzugt ein mechanisch antreibbares teleskopisches Element zwischen jeder ersten und zweiten Querverbindung.

11. Vorrichtung wie in irgendeinem der Ansprüche 5-10 beansprucht, wobei die Positioniermittel ferner aufweisen wenigstens einen Antriebsschaft (150) zwischen benachbarten ersten starren Querverbindungen (113), welche Antriebsschäfte sich im Wesentlichen in Längsrichtung erstrecken und eingerichtet sind, um die teleskopischen Elemente (140) zu steuern.

12. Vorrichtung wie in irgendeinem der Ansprüche 5-11 beansprucht, wobei jede erste starre Querverbindung mit einer Stützfläche versehen ist, um das Form bildende Teil zu stützen.

13. Verfahren zum Herstellen eines gekrümmten Elements mit einem bestimmten Krümmungsradius unter Verwenden einer kontinuierlich zugeführten Materialschicht, **dadurch gekennzeichnet, dass**
- eine Form mit einer gekrümmten Fläche bereitgestellt wird, welche gekrümmte Fläche einen einstellbaren Krümmungsradius hat, wobei die gekrümmte Fläche eine Querrichtung D, eine gekrümmte Längsrichtung L mit einem Krümmungsradius R und eine Zuführseite (103), die sich in der Querrichtung D erstreckt, und eine dazu parallele Auslassseite (104) hat,
- die Form einstellt wird auf den bestimmten Krümmungsradius durch Verlagern der Auslassseite relativ zu der Zuführseite,
- und das gekrümmte Element geformt wird durch Führen der zugeführten Materialschicht über die einstellte Form.

14. Verfahren wie in Anspruch 13 beansprucht, wobei die gekrümmte Fläche erwärmt wird auf eine Temperatur zwischen 140 und 200 Grad Celsius, und/oder ein Verbundharz, wie z.B. ein Polyesterharz, zu der Materialschicht hinzugefügt wird, und/oder die Materialschicht UVstabilisiert wird, und/oder Glasfasern zu der Materialschicht hinzugefügt werden, und/oder die Materialschicht gebildet wird durch Anordnen eines Verbundharzes und optional von Fasern zwischen zwei Filmen und Erwärmen diese Verbundfilmmaterials.

## Revendications

1. Dispositif de fabrication (100) d'une plaque en arche (11) avec un rayon de courbure déterminé en utilisant une couche de matériau délivré de manière continue (10), **caractérisé en ce que** le dispositif comprend un moule réglable (101) avec une surface en arche (102) destiné à former la couche de matériau délivré de manière continue par le dessus, laquelle surface en arche (102) présente une direction transversale D, une direction longitudinale incurvée L avec un rayon de courbure R, et un côté d'alimentation (103) s'étendant dans la direction transversale (D) et un côté de déchargement (104) parallèle à celui-ci ; lequel moule réglable est adapté afin de modifier le rayon de courbure R de la surface en arche en modifiant la position du côté de déchargement par rapport au côté d'alimentation (P1, P2).

2. Dispositif selon la revendication 1, comprenant, en outre, un moyen de réglage destiné à régler la position du côté de déchargement.

3. Dispositif selon la revendication 2, dans lequel les moyens de réglage sont adaptés afin de déplacer verticalement et horizontalement le côté de déchargement.

4. Dispositif selon la revendication 1 ou 2, dans lequel les moyens de réglage comprennent des moyens de guidage verticaux et horizontaux (121, 122), dans lequel le côté de déchargement peut être guidé et verrouillé sur le moyen de guidage vertical et dans lequel les moyens de guidage verticaux sont montés de manière à pouvoir se déplacer sur les moyens de guidage horizontaux, ceci de telle sorte que le côté de déchargement puisse être déplacé horizontalement et verticalement.

5. Dispositif selon l'une quelconque des revendications précédentes, dans lequel le moule comprend une structure qui est assemblée à partir de :
au moins trois premiers profilés (111) qui sont agencés de manière adjacente l'un par rapport à l'autre dans la direction longitudinale et qui sont reliés l'un à l'autre afin de pivoter dans chaque cas autour d'un premier arbre transversal (131a) ;
au moins trois seconds profilés (112) qui sont agencés de manière adjacente l'un par rapport à l'autre dans la direction longitudinale et qui sont reliés l'un à l'autre afin de pivoter dans chaque cas autour d'un premier arbre transversal (131b) ; lesquels seconds profilés sont parallèles aux premiers profilés ;
un jeu de première liaisons transversales rigides (113) entre les premiers et seconds profilés ;
une partie de formation de moule (102) qui s'étend sur les premières liaisons transversales de manière à former la surface en arche ; et
un moyen de positionnement destiné à définir la position des premiers et seconds profilés en fonction de la position du côté de déchargement par rapport au côté d'alimentation.

6. Dispositif selon la revendication 5, dans lequel chaque premier et second profilés comporte des premier, deuxième et troisième angles (115a, 115b) ; (116a, 116b) ; (117a, 117b), dans lequel les premier et deuxième angles sont adjacents à la surface en arche ; dans lequel pour chaque paire de profilés adjacents (111, 112), le premier angle d'un de ses profilés est relié de manière à pouvoir pivoter au second angle du profilé adjacent au moyen du premier arbre transversal (131) ; et
dans lequel le moyen de positionnement comprend un moyen de réglage de distance entre le troisième angle d'un de ses profilés et le troisième angle du profilé adjacent.

7. Dispositif selon la revendication 6, dans lequel la première liaison transversale (113) s'étend sensiblement entre les premiers points d'angle opposés (115a ; 115b) des premiers et seconds profilés.

8. Dispositif selon la revendication 6 ou 7, dans lequel chaque premier profilé est relié à demeure sur un second profilé opposé à proximité du troisième point d'angle au moyen d'une tige de liaison transversale (115).

9. Dispositif selon la revendication 6, 7 ou 8, dans lequel le moyen de réglage de distance comprend :
un premier bras (133) et un second bras (134) reliés à celui-ci afin de pivoter autour d'un second arbre transversal (132).

10. Dispositif selon l'une quelconque des revendications 5 à 9, dans lequel le moyen de positionnement comprend en outre :
un seconde liaison transversale rigide (114) qui relie mutuellement les seconds arbres transversaux opposés ; et
au moins un élément télescopique (140), de préférence, un élément télescopique pouvant être entraîné mécaniquement, entre chacune des premières et secondes liaisons transversales rigides.

11. Dispositif selon l'une quelconque des revendications 5 à 10, dans lequel le moyen de positionnement comprend, en outre, au moins un arbre d'entraînement (150) entre des premières liaisons transversales rigides adjacentes (113), lesquels arbres d'entraînement s'étendent sensiblement dans la direction longitudinale et sont adaptés afin de commander les éléments télescopiques (140).

12. Dispositif selon l'une quelconque des revendications 5 à 11, dans lequel chaque première liaison transversale rigide comporte une surface de support afin de supporter la partie de formation de moule.

13. Procédé de fabrication d'un élément en arche avec un rayon de courbure déterminé en utilisant une couche de matériau alimenté en continu, **caractérisé en ce que**
un moule avec une surface en arche est agencé, laquelle surface en arche présente un rayon de courbure réglable, dans lequel la surface en arche présente une direction transversale D, une direction longitudinale incurvée L avec un rayon de courbure R, et un côté d'alimentation (103) s'étendant dans la direction transversale D et un côté de déchargement (104) parallèle à celui-ci ;
le moule est défini par rapport au rayon de courbure déterminé en déplaçant le côté de déchargement par rapport au côté d'alimentation ;
et l'élément courbe est formé en guidant la couche de matériau délivré sur le moule défini.

14. Procédé selon la revendication 13, dans lequel la surface en arche est chauffée à une température comprise entre 140 et 200 degrés Celsius ; et/ou une résine composite, telle qu'une résine polyester, est ajoutée à la couche de matériau ; et/ou la couche de matériau est stabilisée par UV ; et/ou des fibres de verre sont ajoutées à la couche de matériau ; et/ou la couche de matériau est formée en agençant une résine composite et éventuellement des fibres entre deux films et en chauffant ce matériel en film composite.
